# EUROPEAN PATENT SPECIFICATION

(11) **EP 4 480 821 B1**
(45) Date of publication and mention of the grant of the patent: **25.02.2026**
(21) Application number: 24182093.5
(22) Date of filing: 13.06.2024
(51) Int. Cl.: B64D 11/06, B60N 2/885, B60N 2/809, B60N 2/879

(54) **INTEGRATED SEAT ASSEMBLY WITH HEADREST AND NECK SUPPORT**
INTEGRIERTE SITZANORDNUNG MIT KOPFSTÜTZE UND NACKENSTÜTZE
ENSEMBLE SIÈGE INTÉGRÉ AVEC APPUI-TÊTE ET SUPPORT DE COU

(30) Priority: 23.06.2023 IN 202311041897; 25.03.2024 US 202418615117
(43) Date of publication of application: 25.12.2024
(73) Proprietor: B/E Aerospace, Inc., Winston-Salem, NC 27105 (US)
(72) Inventor: KODATI, Sambasiva Rao, 500090 Hyderabad (IN); GUDLA, Chandra Sekhar, 500090 Hyderabad (IN); GUNDRA, Guruswamy Prasad, 500039 Hyderabad (IN)
(74) Representative: Dehns

(56) References cited:
- DE-A1- 102005 030 258
- US-A1- 2004 007 910
- US-A1- 2021 178 948

## Description

### TECHNICAL FIELD AND BACKGROUND

The present disclosure relates generally to passenger seat comfort and support, and more particularly, to an integrated seat assembly including an adjustable headrest subassembly and an independently adjustable neck support subassembly, each of which further include articulating supports.

Seats such as aircraft passenger seats are designed for safety and comfort. Safety typically pertains to the seat frame construction and material performance, while comfort typically pertains to the seat adjustability, ergonomics, cushioning, and climatization.

Headrests are one example of a seat element that provides both comfort and support. For example, a seat may include a separate headrest that serves to center the head with respect to the backrest, provide additional cushioning, and in some cases include a provision for sleeping. While some headrests may be adjustable depending on the user and user preference, adjustability is typically limited to height and/or tilt. In addition, conventional headrests do not offer similar comfort and support to the neck. As such, passengers requiring neck support, particularly in airliners, are required to supply their own neck pillow which can be cumbersome to carry, forgotten when deplaning, and does not comply with FAA flammability performance requirements.

US 2004/007910 A1 discloses an adjustable headrest mounting plate for an aircraft passenger seat. The adjustable headrest mounting plate includes a base for being attached to a seat back of the seat, and first and second pairs of side head supports mounted on the base and extending laterally away from the base. Each of the pairs of side head supports includes an upper side head support and a lower side head support. The upper side head support and lower side head support are mounted on the base for independent fore and aft movement as desired by the passenger.

Therefore, what is needed is an integrated seat element that provides both head and neck support with separate adjustment capabilities to accommodate various users and user preferences.

### BRIEF SUMMARY

According to the inventive concept, a headrest assembly according to claim 1 is provided.

In some embodiments, each of the left neck support and the right neck support include a plurality of rotatably connected individual segments.

In some embodiments, each of the left neck support and the right neck support are fully articulating gooseneck supports.

In some embodiments, each of the left headrest support, the right headrest support, the left neck support, and the right neck support are configured to deploy, independently, in a forward direction away from the fixed subassembly.

In some embodiments, each of the headrest support plate, the left headrest support, the right headrest support, the neck support plate, the left neck support, and the right neck support carry a cushion.

In some embodiments, each of the headrest subassembly and the neck support subassembly further include a cushion, the cushion of the headrest subassembly is continuous across the left headrest support, the headrest support plate, and the right headrest support, and the cushion of the neck support subassembly is continuous across the left neck support, the neck support plate, and the right neck support.

In some embodiments, the headrest subassembly and the fixed subassembly interface through a first set of rollers, and the neck support subassembly and the fixed subassembly interface through a second set of rollers.

In some embodiments, at least one of the headrest subassembly and the neck support subassembly further includes a speaker.

In some embodiments, at least one of the headrest subassembly and the neck support subassembly further includes at least one of a massager, a fan, and a heater.

In another aspect, embodiments of the inventive concepts disclosed herein are further directed to an aircraft passenger seat according to claim 10.

This summary is provided solely as an introduction to subject matter that is fully described in the following detailed description and drawing figures. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 illustrates a seat row wherein each seat is equipped with an integrated seat assembly, in accordance with example embodiments of this disclosure;
FIG. 2 is an isometric view of the integrated seat assembly showing the subassemblies, in accordance with example embodiments of this disclosure;
FIG. 3 is an isometric view of the integrated seat assembly showing the front cushions, in accordance with example embodiments of this disclosure;
FIG. 4 is a front view of the integrated seat assembly shown with the cushions removed, in accordance with example embodiments of this disclosure;
FIG. 5 is an exploded view of the integrated seat assembly shown from the front, in accordance with example embodiments of this disclosure;
FIG. 6 is an exploded view of the integrated seat assembly shown from the back, in accordance with example embodiments of this disclosure;
FIG. 7 is a side view of the integrated seat assembly, in accordance with example embodiments of this disclosure;
FIG. 8 is a top view of the integrated seat assembly, in accordance with example embodiments of this disclosure;
FIG. 9 is a front view of the integrated seat assembly including gooseneck supports associated with the neck support subassembly, in accordance with example embodiments of this disclosure;
FIGS. 10A, 10B and 10C are detailed views of optional features of the integrated seat assembly, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details, as long as the resulting embodiment falls within the scope of the claims. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to comfort and support features for seats such as economy and premium class airliner passenger seats. In embodiments, the assemblies described herein provide both head and neck comfort and support by way of independently adjustable subassemblies. In embodiments, each subassembly is fully adjustable, as well as adjustable relative to the other subassembly, such that the adjustment capabilities of the assembly are vast to accommodate virtually any user and user preference. In addition to supporting the head and neck during movement of the vehicle, the assemblies include provisions for sleeping and can serve as a location for optional features such as speakers, massagers, fans, heaters, etc.

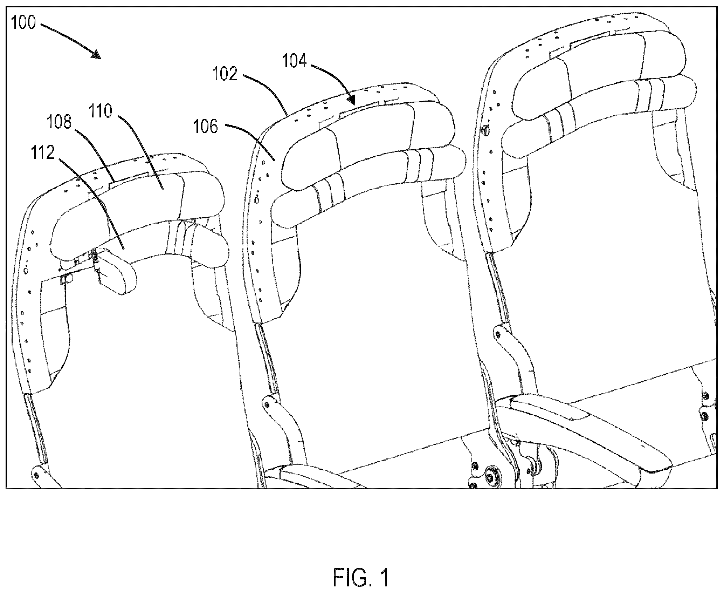

FIG. 1 illustrates a non-limiting example of an economy class passenger seat row 100 including passenger seats 102 each equipped with an integrated seat assembly 104 according to embodiments of the present disclosure. Each passenger seat 102, or "seat 102," generally includes a backrest 106 as well as additional elements such as a seat pan, armrests, etc. (not shown), and not critical to the present disclosure. The frontside of each backrest 106 serves as the mounting location for the integrated seat assembly 104, also referred to herein as "the assembly 104." Each assembly 104 includes a plurality of subassemblies, and more particularly, a fixed subassembly 108, a headrest subassembly 110, and a neck support subassembly 112, each of which are described in detail below. FIG. 1 shows three seats forming the seat row 100, wherein the "left" seat 102 shows both the "left" and "right" sides of the neck support subassembly 112 articulated forward.

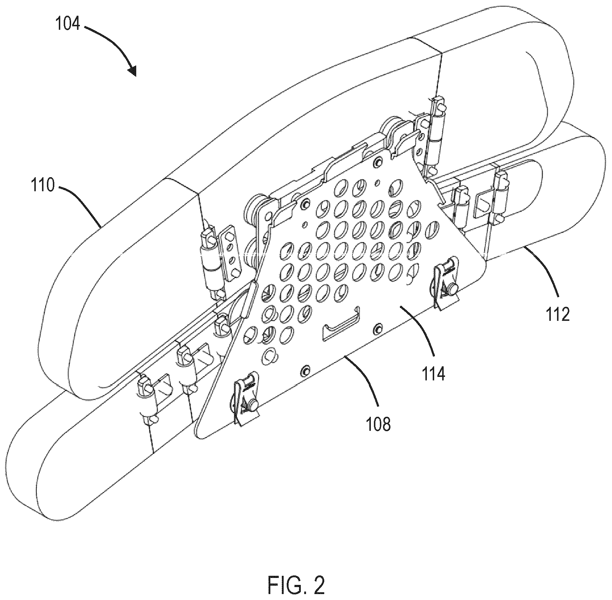

FIG. 2 illustrates the back of the assembly 104 and shown detached from a seat. The fixed subassembly 108 includes a support plate 114 attachable to support structure of a seat backrest. In some embodiments, the support plate 114 may be rigid, made of metal, and foraminous to save weight. The support plate 114 is attachable to a seat backrest using any suitable fasteners, bracketry, etc. In some embodiments, the support plate 114 may form a further part of the backrest. The headrest subassembly 110 is movably attached to the fixed subassembly 108 to permit vertical adjustment of the headrest subassembly 110. The neck support subassembly 112 is also movably attached to the fixed subassembly 108 to permit vertical adjustment of the neck support subassembly 112. Vertical adjustment as used herein means up and down motion not necessarily along a vertical axis considering the adjustable nature of the backrest. Each of the headrest subassembly 110 and the neck support subassembly 112 are independently adjustable, such as manually adjustable, such that both subassemblies can be adjusted up relative to the fixed subassembly 108, down relative to the fixed subassembly 108, closer together, and further spaced apart.

As shown in FIG. 2, each of the headrest subassembly 110 and the neck support subassembly 112 are shown in their retracted, stowed, or otherwise undeployed configuration. In some embodiments, the condition shown may correspond to a taxi, takeoff and landing (TTOL) configuration in which each of the headrest subassembly 110 and the neck support subassembly are articulated substantially planar. In some embodiments, the joints connecting the subassembly components may be configured to prevent rearward movement of the side support members beyond the positions shown in FIG. 2. As such, manually returning the side supports to their fully stowed state results in the configuration shown in FIG. 2.

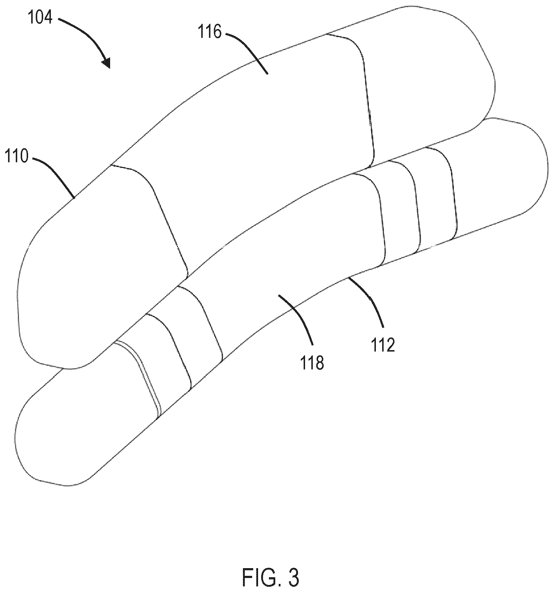

FIG. 3 illustrates the front of the assembly 104 for positioning in direct contact with the user. The headrest subassembly 110 includes a headrest cushion 116. In some embodiments, the headrest cushion 116 may be continuous across the length of the headrest subassembly 110. In other embodiments, the headrest cushion 116 may include a plurality of separate cushion segments wherein the breaks between cushion segments align with the joints to facilitate articulation of the headrest segments. The neck support subassembly 112 also includes a neck support cushion 118. In some embodiments, the neck support cushion 118 may be continuous across the length of the neck support subassembly 112. In other embodiments, the neck support cushion 118 may include a plurality of separate cushion segments wherein the breaks between cushion segments align with the joints to facilitate articulation of the neck support segments. Each of the headrest subassembly 110 and the neck support subassembly 112 may include any number and type of cushions, and may further include a dress cover in some embodiments. Cushion and dress cover materials may be performance based to satisfy requirements for materials used in aircraft.

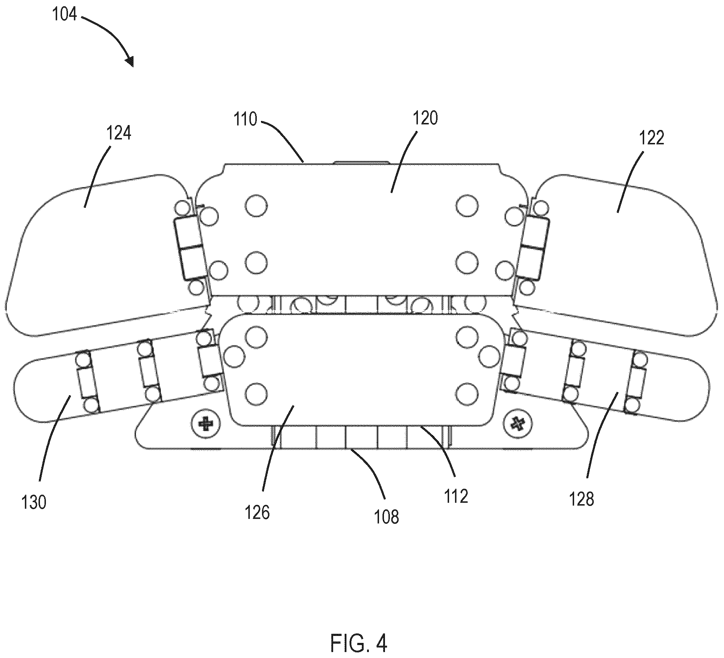

FIG. 4 illustrates the configuration and positional relationship between the separate headrest subassembly 110 and the neck support subassembly 112, and each of the subassemblies 110, 112 relative to the fixed subassembly 108. The headrest subassembly 110 generally includes a headrest support plate 120 movably attached to the fixed subassembly 108, and a plurality of headrest supports rotatably coupled to the headrest support plate 120. As shown, the headrest support plate 120 is center between a left or first headrest support 122, and a right or second headrest support 124. Each of the left and right headrest supports 122, 124 is configured to rotate, independently, relative to the headrest support plate 120. In use, the left and right headrest supports 122, 124 can be individually and manually articulated forward for side support for the head. Each of the left and right side headrest supports 122, 124 may include additional segments, rotatably or otherwise coupled, for further articulation capability.

The neck support subassembly 112 also generally includes a neck support plate 126 movably attached to the fixed subassembly 108, and a plurality of neck supports rotatably coupled to the neck support plate 126. As shown, the neck support plate 126 is centered between a left side or first neck 128, and a right side or second neck support 130. Each of the left side and right side neck supports 128, 130 is configured to articulate, independently, relative to the neck support plate 126. In use, the left and right side neck supports 128, 130 can be individually and manually articulated forward for lateral support for the neck. In use, any one of the headrest supports 122, 124 and neck supports 128, 130 can be manually articulated to any achievable position desired by the user or passenger.

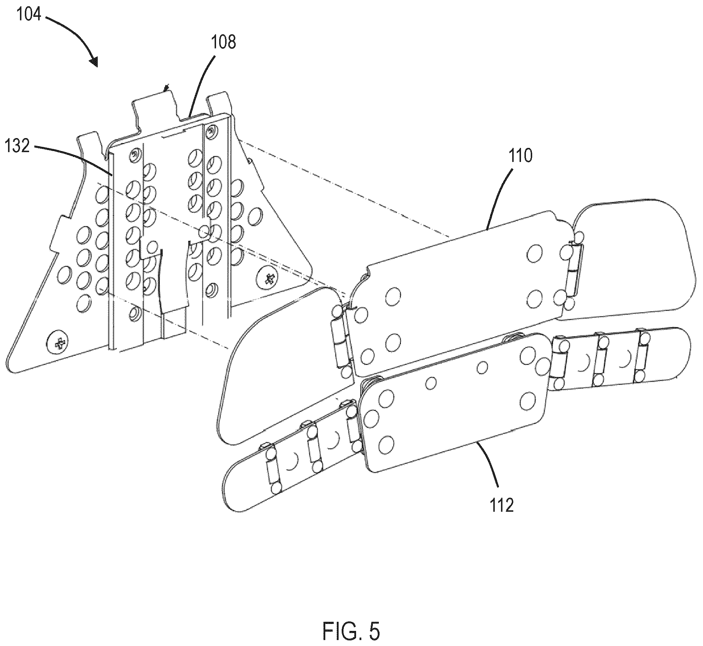

FIG. 5 illustrates further details of the fixed subassembly 108 and interface between the fixed subassembly 108 and the headrest and neck support subassemblies 110, 112. As shown, the fixed subassembly 108 includes a rail 132 (e.g., vertical rail) for guiding vertical translation and the motion path of the subassemblies 110, 112 relative to the fixed subassembly 108 and to each other. Vertical adjustment allows the two subassemblies 110, 112 to be positioned where desired along the height of the backrest and also adjust the spacing between the two subassemblies 110, 112. The length of the rail 132 may be customized depending on the amount of adjustability desired and/or required, and the configuration of the backrest. In embodiments, the rail 132 includes two spaced rails for being positioned between spaced components carried on the subassemblies 110, 112 and configured to interact with the rail.

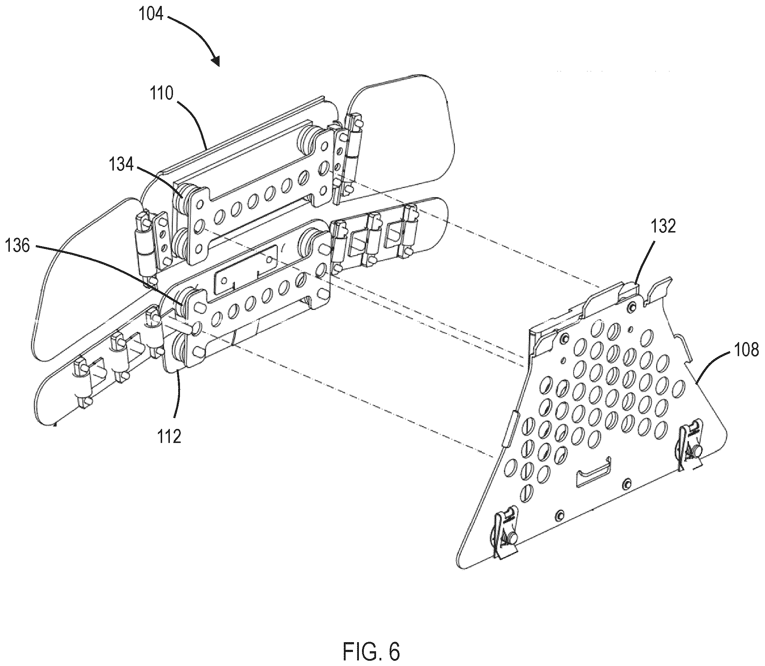

FIG. 6 illustrates further details of the headrest and neck support subassemblies 110, 112 for interfacing with the rail 132. In embodiments, the headrest subassembly 110 includes a plurality of vertically-oriented rollers 134 configured to interact with the rail 132 to facilitate smooth vertical translation of the headrest subassembly 110, and the neck support subassembly 112 also includes vertically-oriented rollers 136 configured to also interact with the rail 132. In embodiments, the rollers 134, 136 may be provided in spaced pairs configured to receive the rail 132 therebetween. In use, the rail 132 and rollers 134, 136 interact to control the motion paths of the subassemblies 110, 112.

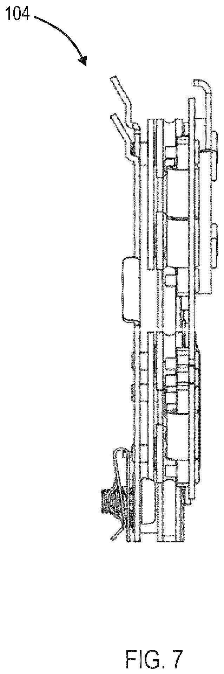

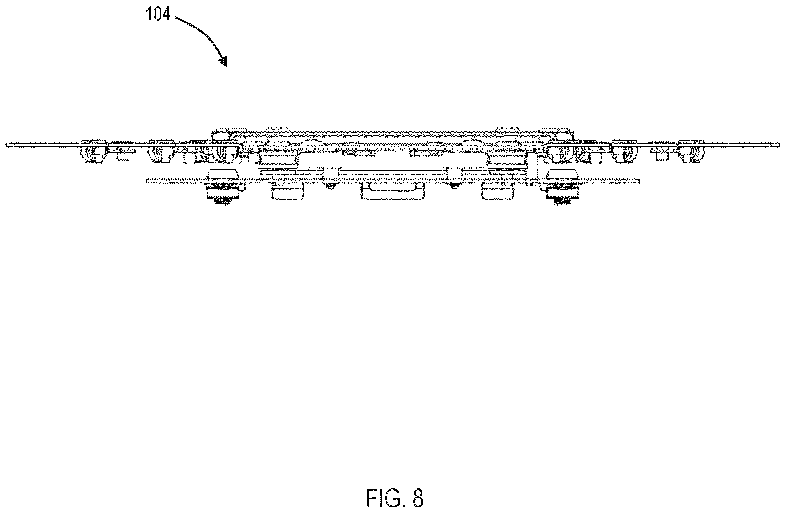

FIGS. 7 and 8 illustrate respective side and top views of the assembly 104 shown in a fully assembled state and without the cushioning. As apparent from the views, the assembly 108 has a thin profile to be compatible for use with various backrest configurations and while permitting a maximum amount of cushioning to provide a heavily padded assembly 108.

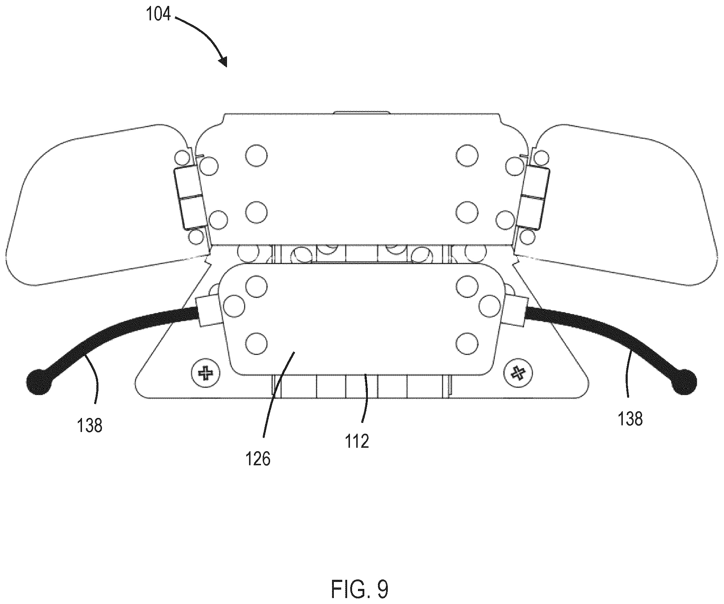

FIG. 9 illustrates a further embodiment of the assembly 104 wherein the neck support subassembly 112 includes the neck support plate 126 and left and right gooseneck arms 138 known to those in the art for providing full adjustability in all directions. In embodiments, this configuration provides additional adjustment capabilities as compared to the rotatably coupled supports described above, as well as the ability of the flexible gooseneck to hold its shape.

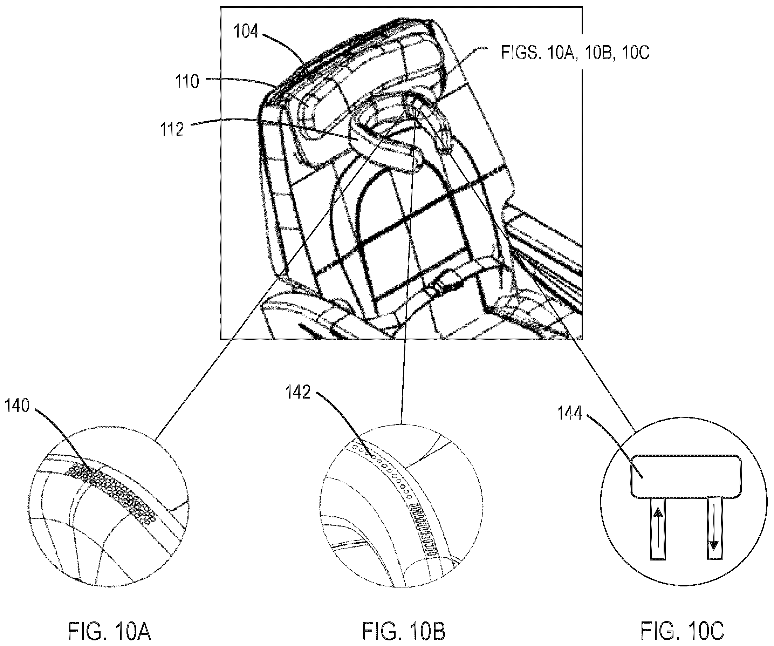

FIGS. 10A, 10B, and 10C illustrate the integrated assembly 104 installed on a premium class passenger seat and with optional features. In further embodiments, at least one of the headrest subassembly 110 and the neck support subassembly 112 may serve to locate additional seat features, for instance at least one speaker 140 as shown in FIG. 10A, air vents 142 as shown in FIG. 10B, an inflatable bladder 144 as shown in FIG. 10C, massagers, heaters, fans, etc. In some embodiments, at least one of electrical connections and fluid passageways may be routed through the subassemblies 110, 112. In the case of fluid passageways, such passageways may open to direct flowing air, conditioned or unconditioned, toward the user to provide a cooling and or heating effect commensurate with luxuries expected in a premium class seat.

From the above description, it is clear that the inventive concepts disclosed herein are well adapted to achieve the objectives and to attain the advantages mentioned herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts as defined by the claims.

## Claims

1. A headrest assembly (104) for mounting to a passenger seat, comprising:
a support plate (114) for mounting to the passenger seat;
a rail (132) mounted to the support plate (114);
a headrest subassembly (110) including a headrest support plate (120) translatably mounted to the rail (132), a left headrest support (122) rotatably mounted to the headrest support plate, and a right headrest support (124) rotatably mounted to the headrest support plate; and
a neck support subassembly (112) including a neck support plate (126) translatably mounted to the rail (132), a left neck support (128) mounted to the neck support plate, and a right neck support (130) mounted to the neck support plate;
wherein the headrest subassembly (110) and the neck support subassembly (112) are independently translatable along the rail (132).

2. The headrest assembly (104) according to claim 1, wherein each of the left neck support (128) and the right neck support (130) comprise a plurality of rotatably connected individual segments.

3. The headrest assembly (104) according to claim 1 or 2, wherein each of the left neck support (128) and the right neck support (130) are fully articulating gooseneck supports (138).

4. The headrest assembly (104) according to claim 1, 2 or 3, wherein each of the left headrest support (122), the right headrest support (124), the left neck support (128), and the right neck support (130) are configured to deploy, independently, in a forward direction away from the support plate (114).

5. The headrest assembly (104) according to any preceding claim, wherein each of the headrest support plate (114), the left headrest support (122), the right headrest support (124), the neck support plate (126), the left neck support (128), and the right neck support (130) carries a cushion (118).

6. The headrest assembly (104) according to any of claims 1 to 4, wherein:
each of the headrest subassembly (110) and the neck support subassembly (112) further comprises a cushion (116, 118);
the cushion (116) of the headrest subassembly (110) is continuous across the left headrest support (122), the headrest support plate (120), and the right headrest support (124); and
the cushion (118) of the neck support subassembly (112) is continuous across the left neck support (128), the neck support plate (126), and the right neck support (130).

7. The headrest assembly (104) according to any preceding claim, wherein the headrest subassembly (110) and the rail (132) interface through a first set of rollers (134), and the neck support subassembly (112) and the rail (132) interface through a second set of rollers (136).

8. The headrest assembly (104) according to any preceding claim, wherein at least one of the headrest subassembly (110) and the neck support subassembly (112) further comprises an internal speaker (140).

9. The headrest assembly (104) according to any preceding claim, wherein at least one of the headrest subassembly (110) and the neck support subassembly (112) further comprises at least one of an internal massager, an internal fan, and an internal heater.

10. An aircraft passenger seat (102), comprising:
a backrest (106); and
a headrest assembly (104) according to claim 1;
wherein the support plate (114) is mounted to the backrest (106).

11. The aircraft passenger seat (102) according to claim 10, wherein each of the left neck support (128) and the right neck support (130) comprise a plurality of rotatably connected individual segments.

12. The aircraft passenger seat (102) according to claim 10 or 11, wherein each of the left neck support (128) and the right neck support (130) are fully articulating gooseneck supports (138).

13. The aircraft passenger seat (102) according to claim 10, 11 or 12, wherein each of the left headrest support (122), the right headrest support (124), the left neck support (128), and the right neck support (130) are configured to deploy, independently, in a forward direction away from the support plate (114).

14. The aircraft passenger seat (102) according to claim 10, 11, 12 or 13, wherein:
each of the headrest subassembly (110) and the neck support subassembly (112) further comprises a cushion (116, 118);
the cushion (116) of the headrest subassembly (110) is continuous across the left headrest support (122), the headrest support plate (120), and the right headrest support (124); and
the cushion (118) of the neck support subassembly (112) is continuous across the left neck support (128), the neck support plate (126), and the right neck support (130).

15. The aircraft passenger seat (102) according to any of claims 10 to 14, wherein at least one of the headrest subassembly (110) and the neck support subassembly (112) further comprises at least one of an internal speaker (140), an internal massager, an internal fan, and an internal heater.

## Patentansprüche

1. Kopfstützenbaugruppe (104) zum Montieren an einem Passagiersitz, umfassend:
eine Trägerplatte (114) zum Montieren an dem Passagiersitz;
eine an der Trägerplatte (114) montierte Schiene (132);
eine Kopfstützen-Unterbaugruppe (110), die eine verschiebbar an der Schiene (132) montierte Kopfstützen-Trägerplatte (120),
einen drehbar an der Kopfstützen-Trägerplatte montierten linken Kopfstützenträger (122) und einen drehbar an der Kopfstützen-Trägerplatte montierten rechten Kopfstützenträger (124) beinhaltet; und
eine Nackenstützen-Unterbaugruppe (112), die eine verschiebbar an der Schiene (132) montierte Nackenstützenplatte (126), eine an der Nackenstützenplatte montierte linke Nackenstütze (128) und eine an der Nackenstützenplatte montierte rechte Nackenstütze (130) beinhaltet;
wobei die Kopfstützen-Unterbaugruppe (110) und die Nackenstützen-Unterbaugruppe (112) unabhängig voneinander entlang der Schiene (132) verschiebbar sind.

2. Kopfstützenbaugruppe (104) nach Anspruch 1, wobei jede der linken Nackenstütze (128) und der rechten Nackenstütze (130) eine Vielzahl von drehbar verbundenen Einzelsegmenten umfasst.

3. Kopfstützenbaugruppe (104) nach Anspruch 1 oder 2, wobei es sich bei jeder der linken Nackenstütze (128) und der rechten Nackenstütze (130) um vollständig gelenkige Schwanenhalsstützen (138) handelt.

4. Kopfstützenbaugruppe (104) nach Anspruch 1, 2 oder 3, wobei jede(r) des linken Kopfstützenträgers (122), des rechten Kopfstützenträgers (124), der linken Nackenstütze (128) und der rechten Nackenstütze (130) zum unabhängigen Ausklappen in einer Vorwärtsrichtung weg von der Trägerplatte (114) konfiguriert ist.

5. Kopfstützenbaugruppe (104) nach einem vorhergehenden Anspruch, wobei jede(r) der Kopfstützen-Trägerplatte (114), des linken Kopfstützenträgers (122), des rechten Kopfstützenträgers (124), der Nackenstützenplatte (126), der linken Nackenstütze (128) und der rechten Nackenstütze (130) ein Polster (118) trägt.

6. Kopfstützenbaugruppe (104) nach einem der Ansprüche 1 bis 4, wobei:
jede der Kopfstützen-Unterbaugruppe (110) und der Nackenstützen-Unterbaugruppe (112) ferner ein Polster (116, 118) umfasst;
das Polster (116) der Kopfstützen-Unterbaugruppe (110) durchgehend über den linken Kopfstützenträger (122), die Kopfstützen-Trägerplatte (120) und den rechten Kopfstützenträger (124) hinweg verläuft; und
das Polster (118) der Nackenstützen-Unterbaugruppe (112) durchgehend über die linke Nackenstütze (128), die Nackenstützenplatte (126) und die rechte Nackenstütze (130) hinweg verläuft.

7. Kopfstützenbaugruppe (104) nach einem vorhergehenden Anspruch, wobei die Kopfstützen-Unterbaugruppe (110) und die Schiene (132) über einen ersten Satz von Rollen (134) aneinander gekoppelt sind und die Nackenstützen-Unterbaugruppe (112) und die Schiene (132) über einen zweiten Satz von Rollen (136) aneinander gekoppelt sind.

8. Kopfstützenbaugruppe (104) nach einem vorhergehenden Anspruch, wobei mindestens eine der Kopfstützen-Unterbaugruppe (110) und der Nackenstützen-Unterbaugruppe (112) ferner einen internen Lautsprecher (140) umfasst.

9. Kopfstützenbaugruppe (104) nach einem vorhergehenden Anspruch, wobei mindestens eine der Kopfstützen-Unterbaugruppe (110) und der Nackenstützen-Unterbaugruppe (112) ferner mindestens eine interne Massagevorrichtung, einen internen Lüfter und eine interne Heizung umfasst.

10. Luftfahrzeugpassagiersitz (102), umfassend:
eine Rückenlehne (106); und
eine Kopfstützenbaugruppe (104) nach Anspruch 1;
wobei die Trägerplatte (114) an der Rückenlehne (106) montiert ist.

11. Luftfahrzeugpassagiersitz (102) nach Anspruch 10, wobei jede der linken Nackenstütze (128) und der rechten Nackenstütze (130) eine Vielzahl von drehbar verbundenen Einzelsegmenten umfasst.

12. Luftfahrzeugpassagiersitz (102) nach Anspruch 10 oder 11, wobei es sich bei jeder der linken Nackenstütze (128) und der rechten Nackenstütze (130) um vollständig gelenkige Schwanenhalsstützen (138) handelt.

13. Luftfahrzeugpassagiersitz (102) nach Anspruch 10, 11 oder 12, wobei jede(r) des linken Kopfstützenträgers (122), des rechten Kopfstützenträgers (124), der linken Nackenstütze (128) und der rechten Nackenstütze (130) zum unabhängigen Ausklappen in einer Vorwärtsrichtung weg von der Trägerplatte (114) konfiguriert ist.

14. Luftfahrzeugpassagiersitz (102) nach Anspruch 10, 11, 12 oder 13, wobei:
jede der Kopfstützen-Unterbaugruppe (110) und der Nackenstützen-Unterbaugruppe (112) ferner ein Polster (116, 118) umfasst;
das Polster (116) der Kopfstützen-Unterbaugruppe (110) durchgehend über den linken Kopfstützenträger (122), die Kopfstützen-Trägerplatte (120) und den rechten Kopfstützenträger (124) hinweg verläuft; und
das Polster (118) der Nackenstützen-Unterbaugruppe (112) durchgehend über die linke Nackenstütze (128), die Nackenstützenplatte (126) und die rechte Nackenstütze (130) hinweg verläuft.

15. Luftfahrzeugpassagiersitz (102) nach einem der Ansprüche 10 bis 14, wobei mindestens eine der Kopfstützen-Unterbaugruppe (110) und der Nackenstützen-Unterbaugruppe (112) ferner mindestens einen internen Lautsprecher (140), eine interne Massagevorrichtung, einen internen Lüfter und eine interne Heizung umfasst.

## Revendications

1. Ensemble appui-tête (104) destiné à être monté sur un siège passager, comprenant :
une plaque de support (114) destinée à être montée sur le siège passager ;
un rail (132) monté sur la plaque de support (114) ;
un sous-ensemble appui-tête (110) comportant une plaque de support d'appui-tête (120) montée en translation sur le rail (132), un support d'appui-tête gauche (122) monté de manière rotative sur la plaque de support d'appui-tête, et un support d'appui-tête droit (124) monté de manière rotative sur la plaque de support d'appui-tête ; et
un sous-ensemble support de cou (112) comportant une plaque de support de cou (126) montée en translation sur le rail (132),
un support de cou gauche (128) monté sur la plaque de support de cou, et un support de cou droit (130) monté sur la plaque de support de cou ;
dans lequel le sous-ensemble appui-tête (110) et le sous-ensemble support de cou (112) peuvent effectuer indépendamment une translation le long du rail (132).

2. Ensemble appui-tête (104) selon la revendication 1, dans lequel chacun du support de cou gauche (128) et du support de cou droit (130) comprend une pluralité de segments individuels reliés de manière rotative.

3. Ensemble appui-tête (104) selon la revendication 1 ou 2, dans lequel chacun du support de cou gauche (128) et du support de cou droit (130) est un support en col de cygne entièrement articulé (138).

4. Ensemble appui-tête (104) selon la revendication 1, 2 ou 3, dans lequel chacun du support d'appui-tête gauche (122), du support d'appui-tête droit (124), du support de cou gauche (128) et du support de cou droit (130) est conçu pour se déployer, indépendamment, dans une direction vers l'avant, à l'opposé de la plaque de support (114).

5. Ensemble appui-tête (104) selon l'une quelconque revendication précédente, dans lequel chacune de la plaque de support (114) d'appui-tête, du support d'appui-tête gauche (122), du support d'appui-tête droit (124), de la plaque de support de cou (126), du support de cou gauche (128) et du support de cou droit (130) porte un coussin (118).

6. Ensemble appui-tête (104) selon l'une quelconque des revendications 1 à 4, dans lequel :
chacun du sous-ensemble appui-tête (110) et du sous-ensemble support de cou (112) comprend en outre un coussin (116, 118) ;
le coussin (116) du sous-ensemble appui-tête (110) est continu sur le support d'appui-tête gauche (122), la plaque de support d'appui-tête (120) et le support d'appui-tête droit (124) ; et
le coussin (118) du sous-ensemble support de cou (112) est continu sur le support de cou gauche (128), la plaque de support de cou (126) et le support de cou droit (130).

7. Ensemble appui-tête (104) selon l'une quelconque revendication précédente, dans lequel le sous-ensemble appui-tête (110) et le rail (132) s'interfacent par l'intermédiaire d'un premier jeu de rouleaux (134), et le sous-ensemble support de cou (112) et le rail (132) s'interfacent par l'intermédiaire d'un second jeu de rouleaux (136).

8. Ensemble appui-tête (104) selon l'une quelconque revendication précédente, dans lequel au moins l'un du sous-ensemble appui-tête (110) et du sous-ensemble support de cou (112) comprend en outre un haut-parleur interne (140).

9. Ensemble appui-tête (104) selon l'une quelconque revendication précédente, dans lequel au moins l'un du sous-ensemble appui-tête (110) et du sous-ensemble support de cou (112) comprend en outre au moins l'un parmi un masseur interne, un ventilateur interne et un élément chauffant interne.

10. Siège passager d'aéronef (102), comprenant :
un dossier (106) ; et
un ensemble appui-tête (104) selon la revendication 1 ;
dans lequel la plaque de support (114) est montée sur le dossier (106).

11. Siège passager d'aéronef (102) selon la revendication 10, dans lequel chacun du support de cou gauche (128) et du support de cou droit (130) comprend une pluralité de segments individuels reliés de manière rotative.

12. Siège passager d'aéronef (102) selon la revendication 10 ou 11, dans lequel chacun du support de cou gauche (128) et du support de cou droit (130) est un support en col de cygne entièrement articulé (138).

13. Siège passager d'aéronef (102) selon la revendication 10, 11 ou 12, dans lequel chacun du support d'appui-tête gauche (122), du support d'appui-tête droit (124), du support de cou gauche (128) et du support de cou droit (130) est conçu pour se déployer, indépendamment, dans une direction vers l'avant, à l'opposé de la plaque de support (114).

14. Siège passager d'aéronef (102) selon la revendication 10, 11, 12 ou 13, dans lequel :
chacun du sous-ensemble appui-tête (110) et du sous-ensemble support de cou (112) comprend en outre un coussin (116, 118) ;
le coussin (116) du sous-ensemble appui-tête (110) est continu sur le support d'appui-tête gauche (122), la plaque de support d'appui-tête (120) et le support d'appui-tête droit (124) ; et
le coussin (118) du sous-ensemble support de cou (112) est continu sur le support de cou gauche (128), la plaque de support de cou (126) et le support de cou droit (130).

15. Siège passager d'aéronef (102) selon l'une quelconque des revendications 10 à 14, dans lequel au moins l'un du sous-ensemble appui-tête (110) et du sous-ensemble support de cou (112) comprend en outre au moins l'un parmi un haut-parleur interne (140), un masseur interne, un ventilateur interne et un élément chauffant interne.
